Europäisches Patentamt

European Patent Office

Office européen des brevets

(19)

(11) Veröffentlichungsnummer: **0 323 972**
**B1**

(12) **EUROPÄISCHE PATENTSCHRIFT**

(45) Veröffentlichungstag der Patentschrift: 20.06.90

(51) Int. Cl.⁵: **B 62 D 6/02**

(21) Anmeldenummer: 87906180.2

(22) Anmeldetag: 16.09.87

(86) Internationale Anmeldenummer:
PCT/EP87/00523

(87) Internationale Veröffentlichungsnummer:
WO 88/01958 24.03.88 Gazette 88/07

(54) DREHSCHIEBERVENTIL FÜR HYDRAULISCHE HILFSKRAFTLENKUNGEN.

(30) Priorität: 19.09.86 PCt/ep86/00542

(43) Veröffentlichungstag der Anmeldung:
19.07.89 Patentblatt 89/29

(45) Bekanntmachung des Hinweises auf die
Patenterteilung:
20.06.90 Patentblatt 90/25

(84) Benannte Vertragsstaaten:
DE FR GB IT

(56) Entgegenhaltungen:
EP-A-0 159 687
EP-A-0 171 247
DE-A-2 918 975
DE-A-3 516 219

(73) Patentinhaber: ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder: ELSER, Dieter
Jägerstrasse 10
D-7087 Essingen (DE)
Erfinder: HETZEL, Helmut
Lerchenstrasse 45
D-7070 Schwäbisch Gmünd (DE)
Erfinder: KOGEL, Walter
Am Sonnenweg 2
D-7083 Abtsgmünd (DE)

(74) Vertreter: Raue, Reimund
Zahnradfabrik Friedrichshafen AG Löwentaler
Strasse 100 Postfach 2520
D-7990 Friedrichshafen 1 (DE)

Courier Press, Leamington Spa, England.

**Beschreibung**

Die Erfindung betrifft ein Drehschieberventil für hydraulische Hilfskraftlenkungen von Kraftfahrzeugen nach dem Oberbegriff von Anspruch 1.

Hilfskraftlenkungen sind im allgemeinen so ausgeführt, daß die Ventilkennlinie (Arbeitsdruck — Betätigungskraft-Kennlinie) in einem verhältnismäßig großen Drehwinkelbereich des Drehschiebers einen flachen, allmählichen Anstieg aufweist, um dann mit weiter wachsender Betätigungskraft steil auf einen Höchstwert anzusteigen. Der Fahrer muß also bis zum Erreichen einer höheren Kraftverstärkung, beispielsweise beim Einparken und Rangieren, das Lenkhandrad um einen verhältnismäßig großen Drehwinkel verdrehen. Innerhalb dieses Drehwinkels verdrehen sich die beiden durch den Drehstab elastisch miteinander verbundenen Drehschieber-Bauteile gegeneinander. Je nach Querschnitt und Länge des Drehstabes muß der Fahrer eine mehr oder weniger hohe Betätigungskraft aufbringen, bis das Drehschieberventil die gewünschte Kraftverstärkung ansteuert. Eine solche Ventilkennlinie mit zunächst flachem Anstieg über dem Drehwinkel ermöglicht bei höheren Geschwindigkeiten sehr gute Geradeausfahrt-Eigenschaften, da der Hilfskraftanteil klein bleibt und die Rückmeldung innerhalb des elastischen Bereiches des Drehstabes ein gutes Lenkgefühl zuläßt. Die auf ein exaktes Lenkverhalten bei hohen Geschwindigkeiten abgestimmte Kennliniencharakteristik hat jedoch den Nachteil, daß die Betätigungskraft im Langsamfahrbereich relativ hoch liegt.

Ein Drehschieberventil, welches die Drucksteuerung so vornimmt, daß sich die gegensätzlichen Forderungen einer niedrigen Betätigungskraft im Langsamfahrbereich und einer hohen Betätigungskraft bei schneller Fahrt erfüllen lassen, ist bereits aus der EP 01 71 247 A2 bekannt. Dieses bekannte Drehschieberventil ist Bauteil einer Zahnstangenlenkung, in welcher der mit der Lenkspindel verbundene Drehschieber über den Drehstab mit dem in die Zahnstange eingreifenden Ritzel verbunden ist. Die den Drehschieber umgebende Ventilbuchse ist in Drehrichtung mit einem Steuerspiel gleichfalls mit dem Ritzel gekoppelt, jedoch axial verschieblich auf dem Drehschieber geführt. Die Ventilbüchse stützt sich auf ihrer einen Stirnseite gegen eine Feder im Gehäuse ab, während an der anderen Stirnseite ein Druckraum anschließt. Dieser Druckraum liegt zwischen den radialen Rücklaufbohrungen im Drehschieber und dem zu einem Behälter führenden Rücklaufanschluß. In den Rücklaufanschluß ist eine elektromagnetisch betätigte Verstelldrossel eingebaut, die den Rücklaufquerschnitt in Abhängigkeit von der Fahrgeschwindigkeit steuert. Die Verstelldrossel ist bei schneller Fahrt weit geöffnet, so daß das Öl ungehindert zum Rücklaufanschluß abströmen kann. Die Ventilbuchse verharrt daher auf dem Drehschieber in ihrer durch die Feder bestimmten Ausgangslage, so daß die Steuernuten und die zugehörigen Steuerkanten des Drehschieberventils auf ihrer gesamten Länge zur Druckanregelung verfügbar sind. Dies bedeutet, einen Kennlinienverlauf mit einem allmählichen Druckanstieg über einen verhältnismäßig großen Drehwinkelbereich und erst gegen Ende der Relativdrehung der beiden Drehschieberteile zueinander, den weiteren steilen Druckanstieg.

Bei langsamer Fahrt (Einparken) ist der Durchtrittsquerschnitt an der Verstelldrossel stark verengt. Dadurch bildet sich in dem Druckraum der Ventilbuchse ein Differenzdruck aus, der diese gegen die Federkraft in Endstellung verschiebt. Die wirksame Steuerkantenlänge des Drehschieberventils ist dadurch verkürzt, so daß sich auch die ursprüngliche Charakteristik des Drehschieberventils verändert. Der zum Anregeln des Druckes benötigte Verdrehwinkel zwischen den beiden Drehschieberbauteilen ist kleiner, da der Druckaufbau im aktiven Druckraum des Arbeitszylinders sich viel schneller vollzieht. Dies ist eine Folge des verkleinerten Abregelquerschnittes. Da demzufolge der Drehstab nur um einen kleinen Winkelbetrag verdreht werden muß, ist auch die Betätigungskraft am Lenkhandrad entsprechend kleiner. Die Lenkkraft-Kennlinie hat nunmehr einen sehr steilen Verlauf über den Drehwinkel. Zwischen den beiden beschriebenen Stellungen der Ventilbuchse, nämlich der Ausgangsstellung und der Endstellung, ist in Abhängigkeit des variablen Differenzdruckes jede beliebige Zwischenstellung der Ventilbuchse möglich. Auf diese Weise läßt sich die Ventilcharakteristik dem jeweiligen Fahrzustand anpassen. Zur besseren Kennlinienabstimmung sind die Steuerkanten des bekannten Drehschiebers mit kurzen Taschen versehen, die in lange Steuerschlitze übergehen. Die Taschen haben dabei eine größere Umfangslänge als die Schlitze.

Diese bekannte Ölrücklaufsteuerung zum Verändern der Ventilkennlinie ist nur für Lenkeinrichtungen mit einer getrennten Ventilbuchse geeignet. In Lenkgetrieben, in welchen die Ventilbuchse aus baulichen Gründen mit einem weiteren Getriebeteil vereinigt ist, läßt sich die beschriebene Rücklaufsteuerung nicht verwenden. Infolge ihrer großen Dichtungslänge am Außenumfang arbeiten derartige axialverschieblichen Ventilbuchsen bei der Druckbeaufschlagung mit Hysterese.

Der Erfindung liegt daher die Aufgabe zugrunde, eine allgemein anwendbare Rücklaufsteuerung zu finden. Die Rücklaufsteuerung soll also sowohl in Verbindung mit gekoppelten Ventilbuchsen als auch bei solchen in getrennter Anordnung verwendbar sein.

Diese Aufgabe ist durch das in Anspruch 1 gekennzeichnete Drehschieberventil gelöst. Vorteilhafte Ausgestaltungen sind in den Unteransprüchen angegeben.

Nach dem Hauptmerkmal der Erfindung sind die Rücklaufbohrungen im Drehschieber für jede Drehrichtung getrennt in Längsrichtung hintereinander angeordnet, so daß jeweils zwei in Umfangsrichtung nebeneinander liegende Bohrungsreihen entstehen. Jede Bohrungsreihe ist einer mit dem Stellmotor verbundenen Steuernut in der Ventilbuchse zugeordnet. Zur Veränderung des Rücklaufquerschnitts ist in der konzentrischen Bohrung des Drehschiebers ein Steuerkolben verschieblich eingesetzt. Je nach Stellung des Steuerkolbens steht daher ein größerer oder kleiner Rücklaufsteuerquerschnitt zur Verfügung, so daß man unterschiedliche Betätigungskräfte am Lenkhandrad erhält. Es lassen sich somit auch mit einem Drehschieberventil mit einer axial unverschieblichen Ventilbuchse bei allen Fahrgeschwindigkeiten optimal abgestimmte Betätigungskräfte verwirklichen. Der metallisch im Drehschieber abdichtende Steuerkolben bietet hierbei den Vorteil einer hysteresearmen Funktion.

Der Steuerkolben weist eine zur konzentrischen Bohrung des Drehschiebers offene Sackbohrung auf, so daß das Rücklauföl ungehindert abströmen kann. In die Außenflächen des Steuerkolbens sind etwa im Abstand der im Drehschieber vorgesehenen radialen Rücklaufbohrungen mit der Sackbohrung verbundene Ringnuten eingearbeitet. Diese Ringnuten können zu einem Teil der Rücklaufbohrungen so verschoben sein, daß der Rücklauf teilweise oder ganz abgesperrt ist. Das freie Ende des Steuerkolbens dient hierbei gleichfalls zur Steuerung einer Anzahl der in einer gemeinsamen Querschnittsebene liegenden Rücklaufbohrungen. Auf diese Weise erhält man einen in einem großen Bereich veränderbaren Rücklaufquerschnitt. Anschließend an zwei nebeneinander liegende Bohrungsreihen liegt mittig zu diesen eine weitere Rücklaufbohrung mit einem nicht steuerbaren, also ständig geöffneten Restquerschnitt. Die gesamte Rücklaufsteuerung ist betriebssicher und raumsparend in das Drehschieberventil integriert.

Nach einem weiteren Merkmal der Erfindung sind die Rücklaufbohrungen von Fenstern umgeben, die durch Prägen hergestellt sind. Diese Fenster haben unterschiedliche Breite und Umfangslänge, wobei ein Teil der Fenster eine schräge Außenkontur hat. Die so gestalteten Fenster haben die Aufgabe, die Mengenverteilung auf den jeweils noch offenen Bohrungsquerschnitt so vorzunehmen, daß sich die gewünschte Kennlinienveränderung einstellt. Die Fenster sorgen außerdem dafür, daß der Druck über einen verhältnismäßig langen Strömungsweg abgebaut wird. Die Bohrungsreihen mit den zugehörigen Fenstern sind durch einen längs verlaufenden Steg hydraulisch voneinander getrennt. Durch diese Maßnahme ist gesichert, daß in jeder Drehrichtung von den jeweils zwei nebeneinander liegenden Bohrungsreihen immer nur eine die exakte Druckanregelung übernimmt, d. h., daß Bypass-Ströme vermieden werden. Weiter ist von Bedeutung, daß die mittig angeordnete, nicht steuerbare Rücklaufbohrung und ihr zugehöriges Fenster in beiden Drehrichtungen wirksam sind.

Zur Druckbeaufschlagung weist der Steuerkolben vorteilhaft einen Ringansatz auf, der zusammen mit dem Drehschieber einen Druckraum abschließt. Dieser Druckraum steht mit einer abtriebsseitig angetriebenen Pumpe in Verbindung, die den geschwindigkeitsabhängigen Steuerdruck liefert. Damit sich in dem Druckraum ein Differenzdruck aufbauen kann, ist stromabwärts des Druckraumes eine Drossel eingebaut.

Durch das System des veränderlichen Rücklaufquerschnittes erhält man in jeder Zwischenstellung des Steuerkolbens eine neue Kennlinie zwischen den in der Ausgangsstellung und der Endstellung des Steuerkolbens erzeugten Grenzkennlinien. Da die Pumpe einen konstanten Volumenstrom bereitstellt, hat das System jederzeit die volle Betriebssicherheit einer herkömmlichen Hilfskraftlenkung, denn es steht sofort der maximale Volumenstrom zur Verfügung.

Das Prinzip der Ölrücklaufsteuerung nach der Erfindung läßt sich vorteilhaft auch auf Hilfskraftlenkungen mit zwei voneinander getrennten hydraulischen Lenkkreisen anwenden (Anspruch 6). Solche Zweikreislenkungen bieten eine hohe Sicherheit in schweren Fahrzeugen, die ohne Hilfskraft nicht mehr lenkbar wären. Zweikreislenkungen mit zwei axial hintereinander angeordneten Drehschieberventilen sind allgemein bekannt (z. B. DE-PS 29 18 975). Jedes dieser Drehschieberventile verteilt das von zwei separaten Pumpen gelieferte Drucköl auf getrennte Arbeitszylinder, so daß ein erster und ein zweiter Lenkkreis (Notlenkkreis) verfügbar ist. Die beiden Pumpen können motorabhängig angetrieben sein, es ist jedoch oft vorteilhaft, die Pumpe des zweiten Lenkkreises fahrgeschwindigkeitsabhängig anzutreiben, so daß das Fahrzeug auch bei Ausfall des Motors mit Hilfe des zweiten Lenkkreises aus dem Verkehr gezogen werden kann. Die erfindungsgemäße Ölrücklaufsteuerung ist im Drehschieber des zum ersten Lenkkreis gehörenden Drehschieberventils untergebracht, wobei alle Einzelmerkmale der Querschnittsveränderung mit Hilfe des verschiebbaren Steuerkolbens auch hier Verwendung finden. Im Unterschied zur eingangs aufgezeigten Einkreislenkung erfolgt die Axialverstellung des Steuerkolbens jedoch nicht durch eine zusätzliche geschwindigkeitsabhängige Pumpe, sondern durch die bereits vorhandene abtriebsseitig angetriebene Pumpe des zweiten Lenkkreises. Hierzu ist es lediglich notwendig, den Steuerkolben durch den zweiten Drehschieber hindurch zu verlängern und mit einem Ringansatz zu versehen, der wiederum mit dem zweiten Drehschieber zusammen einen Druckraum bildet. Das im Wartebetrieb nahezu drucklos durch das zweite Drehschieberventil hindurchströmende Ölvolumen dient jetzt zur Steuerung des Ölrücklaufs des ersten Lenkkreises. Bei voll intakter Lenkung bringt der erste Lenkkreis die benötigte Hilfskraft alleine auf. Fällt dagegen der erste Lenkkreis, z. B. infolge eines Leitungsbruchs aus, kann das Fahrzeug bei etwas erhöhter Handkraft und ohne die Vorteile der Rücklaufsteuerung, die nur auf den ersten Lenkkreis wirkt, aus dem Verkehr genommen werden.

In einer weiteren Ausführungsform ist in den Rücklaufstrom stromabwärts hinter den Steuerkolben ein elektrisch betätigtes Drosselventil eingebaut, welches einen auf eine Stirnfläche des Steuerkolbens wirkenden Staudruck erzeugt. Auf diese Weise ist es möglich, die Ventilcharakteristik auf verschiedene Einflußgrößen, z. B. die Zuladung, Querbeschleunigung und die Geschwindigkeit, abzustimmen. Diese Anordnung hat bei einem verhältnismäßig einfachen Aufbau eine hohe Betriebssicherheit.

Weitere Einzelheiten der Erfindung sind in der Zeichnung anhand von drei Ausführungsbeispielen näher erläutert. Es zeigt

Fig. 1 einen Längsschnitt durch eine Blocklenkung mit eingebautem Arbeitszylinder;

Fig. 2 eine Ausschnittvergrößerung des Drehschieberventils entsprechend der strichpunktierten Umrandung II in Fig. 1;

Fig. 3 einen stark vergrößerten Teillängsschnitt des Drehschieberventils bei weggelassenem Gehäuse;

Fig. 4 einen Längsschnitt nach der Linie IV-IV der Fig. 3 mit dem Steuerkolben in Ausgangsstellung für geringste Betätigungskraft;

Fig. 5 einen Querschnitt durch das Drehschieberventil in Neutralstellung nach der Linie V-V in Fig. 3;

Fig. 6 eine teilweise Abwicklung des Drehschiebers, gesehen in Richtung des Pfeiles VI der Fig. 5;

Fig. 7 einen Querschnitt entsprechend Fig. 5, jedoch in einer Lenkstellung;

Fig. 8 eine teilweise Abwicklung des Drehschiebers, gesehen in Richtung des Pfeiles VIII der Fig. 7;

Fig. 9 einen Längsschnitt nach Fig. 4, jedoch in der Endstellung des Steuerkolbens für höchste Betätigungskraft;

Fig. 10 ein Arbeitsdruck-Handkraft-Kennlinienfeld;

Fig. 11 einen Teillängsschnitt durch eine Zweikreislenkung und

Fig. 12 einen Teillängsschnitt durch eine weitere Ausführungsform mit einem elektrischen Drosselventil.

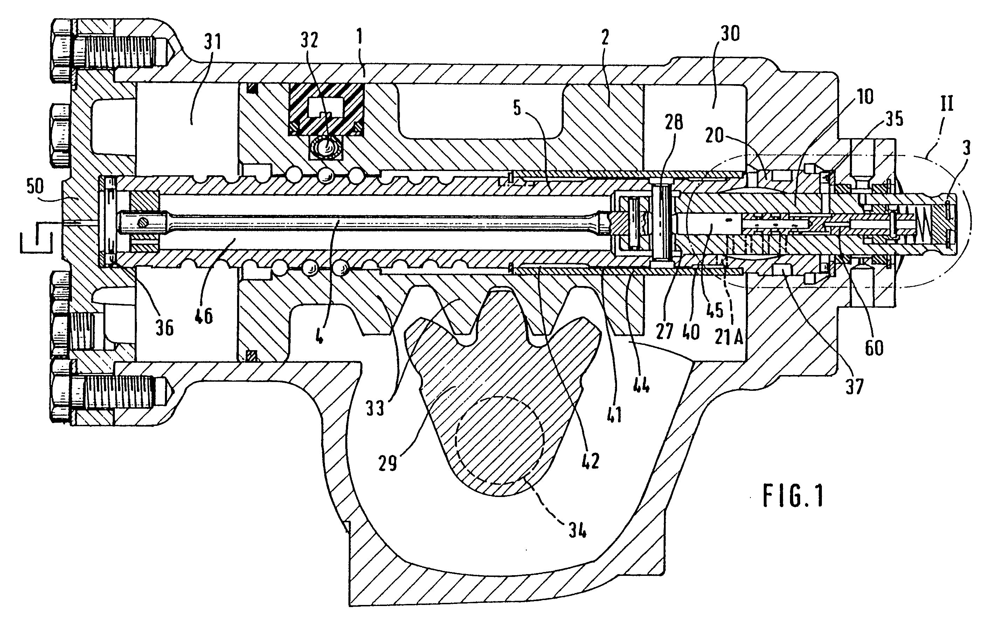

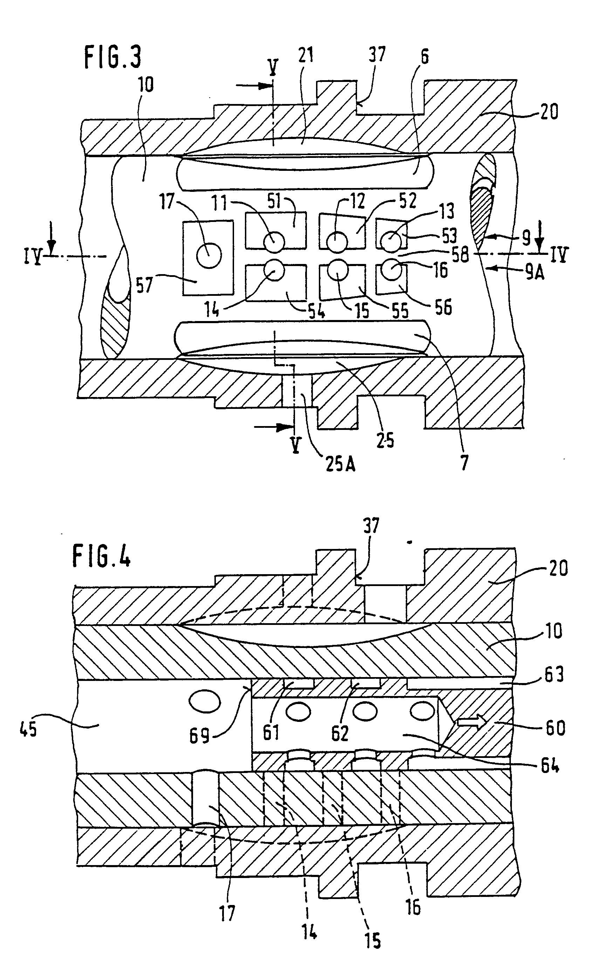

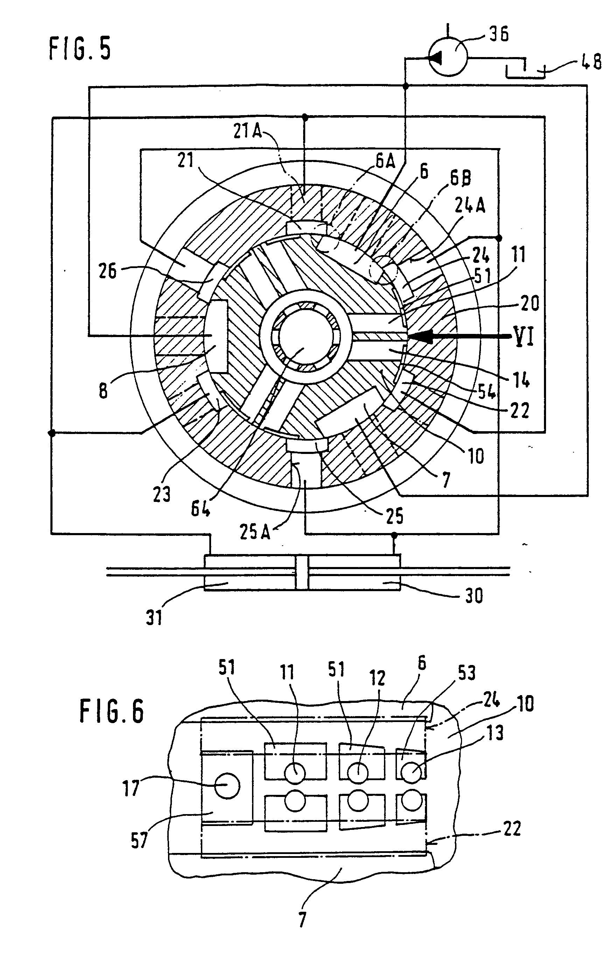

Die Fig. 1 zeigt ein sogenanntes Blocklenkgetriebe mit einem in ein Getriebegehäuse 1 eingebauten Arbeitskolben 2. Eine Lenkspindel 3, die ein nicht dargestelltes Lenkhandrad trägt, ist über einen Drehstab 4 an eine Gewindespindel 5 angeschlossen. Wie am besten aus Fig. 5 ersichtlich, enthält die Lenkspindel 3 in gleichen Winkelabständen voneinander entfernt z. B. drei axiale Zulaufsteuernuten 6, 7, 8, die zu einem Drehschieber 10 gehören. Zwischen diesen Steuernuten 6 bis 8 liegen jeweils zwei Reihen 9 bzw. 9A in Längsrichtung hintereinander liegender Rücklaufbohrungen, in Fig. 3 sind dies die Rücklaufbohrungen 11 bis 13 bzw. 14 bis 16. Mittig zu diesen beiden Reihen liegt eine weitere Rücklaufbohrung 17 mit größerem Durchmesser. Die genauere Gestaltung dieser Bohrungsanordnung und ihrer Funktion wird später eingehend erläutert.

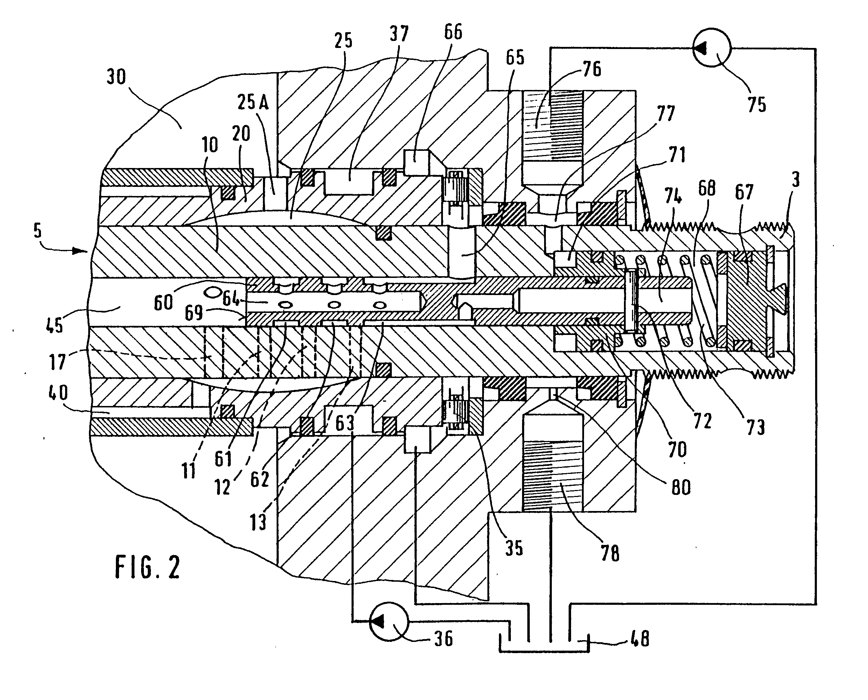

Der Drehschieber 10 arbeitet mit einer mit der Gewindespindel 5 einstückig hergestellten Ventilbuchse 20 mit axialen Steuernuten 21, 22, 23 bzw. 24, 25, 26 (Fig. 5) zusammen. Der Drehschieber 10 und die Ventilbüchse 20 bilden die Bauteile eines in solchen Hilfskraftlenkungen üblichen Drehschieberventils. Ein in der Gewindespindel 5 fester und in Drehrichtung mit Spiel durch eine Bohrung 27 der Lenkspindel 3 hindurchgeführter Querbolzen 28 legt einen bestimmten Steuerweg zwischen der Lenkspindel 3 und der Gewindespindel 5 fest (Fig. 1). Innerhalb dieses Steuerspiels steuert das Drehschieberventil 10, 20 je nach Drehrichtung einen Druck in einem Druckraum 30 oder 31 des Arbeitskolbens 2 an. Der Arbeitskolben 2 greift über eine endlose Kugelkette 32 in die Gewindespindel 5 ein und steht über eine Verzahnung 29 mit einem auf einer Lenkwelle 34 angeordneten Lenksegment 35 in Eingriff. Axiallager 35 und 36 dienen zur Aufnahme der auf die Gewindespindel 5 einwirkenden Axialkräfte. Eine von einem Fahrzeugmotor angetriebene Pumpe 36 kann über eine Ringnut 37 der Ventilbuchse 20 (Fig. 2) und die Zulaufsteuernuten 6, 7, 8 im Drehschieber 10 an die Steuernuten 21, 22, 23 bzw. 24, 25, 26 (Fig. 5) der Ventilbuchse 20 angeschlossen werden. Der Einfachheit halber sind lediglich den Öldurchtritt steuernde Steuerkanten 6A und 6B der Zulaufsteuernut 6 bezeichnet. Die Steuernuten 21, 22, 23 stehen über zugehörige Radialbohrungen, z. B. 21A, mit dem Druckraum 31 und die Steuernuten 24, 25, 26 über entsprechende Radialbohrungen, z. B. 25A, mit dem Druckraum 30 in Verbindung. Aus Fig. 1 ist zu ersehen, wie die Verbindung zum Druckraum 31 im Lenkgetriebe verläuft: Der Ölweg führt von der Radialbohrung 21A in zwischen einem Rohr 44 und der Gewindespindel 5 vorgesehene Ringspalten 40, 41, 42 und schließlich über das Spindelgewinde in diesen Druckraum 31.

Eine konzentrische Bohrung 45 im Drehschieber 10 ist über die Bohrung 27 des Querbolzens 28 mit einem Innenraum 46 der Gewindespindel 5 verbunden. Dieser Innenraum 46 ist über einen Auslaßanschluß in einem Deckel 50 zu einem Behälter 48 entlastet.

Jede Rücklaufbohrung 11 bis 17 des aus Fig. 3 ersichtlichen Systems hat ein sogenanntes Fenster 51 bis 57 mit einem sehr flachen Drosselquerschnitt für die Druckanregelung. Diese Fenster sind unterschiedlich breit und haben durch eine schräge Außenkontur auch eine unterschiedlich wirksame Länge. Das Fenster 57 der Rücklaufbohrung 17 für den unveränderlichen Restquerschnitt hat die kürzeste Umfangslänge. Die Rücklaufbohrungen 11, 12, 13 bzw. 14, 15, 16 und die zugehörigen Fenster sind durch einen Steg 58 voneinander hydraulisch getrennt. Das System der Rücklaufbohrungen wiederholt sich bei dem gewählten Ausführungsbeispiel am Drehschieber 10 insgesamt dreimal. Wegen der leichteren Verständlichkeit ist die Erfindung jedoch nur an einem Bohrungssystem näher erläutert und mit Bezugsziffern versehen.

Nach Fig. 4 ist in der konzentrischen Bohrung 45 des Drehschiebers 10 ein axial beweglicher Steuerkolben 60 mit zwei kurzen Ringnuten 61, 62 und einer langen Ringnut 63 geführt. Die Ringnuten 61, 62, 63 stehen über eine Sackbohrung 64 des Steuerkolbens 60, die konzentrische Bohrung 45 und über den Innenraum 46 der Gewindespindel 5 mit dem Behälter 48 in Verbindung. Die lange Ringnut 63 hat außerdem noch über einen weiteren Rücklaufweg, nämlich eine Radialbohrung 65 (Fig. 2), das Axiallager 35 und über eine Gehäuserücklaufnut 66 mit dem Behälter 48 Verbindung. Die Ringnuten 61 und 62 wirken je nach Stellung des Steuerschiebers 60 mit den Rücklaufbohrungen 12, 13 bzw. 15, 16 zusammen. Die dem Drehstab 4 zugewandte Stirnseite 69 des Steuerkolbens 60 öffnet oder schließt die Rücklaufbohrungen 11, 14. Die Rücklaufbohrung 17 wird von dem Steuerkolben 60 nicht mehr erfaßt, d. h., sie bildet einen ständig geöffneten Restquerschnitt.

Nach Fig. 2 ragt der Steuerkolben 60 am Ende der Lenkspindel 3 in einen durch einen Stopfen 67 verschlossenen Raum 68. In diesem Raum 68 trägt der Steuerkolben 60 einen Ringansatz 70, der mit dem Drehschieber 10 einen ringförmigen Druckraum 71 abschließt. Der Ringansatz 70 ist mit Hilfe eines Stiftes 72 auf dem Steuerkolben 60 befestigt. Eine Feder 73 hält den Steuerkolben 60 in der gezeichneten Ausgangsstellung. Eine zweite Axialbohrung 74 im Steuerkolben 60 verbindet den Raum 68 mit der Ringnut 63 und mit dem bereits beschriebenen Rücklauf. Somit kann sich in diesem Raum 68 kein Druck aufbauen. Eine abtriebsseitig, z. B. von einer Getriebeausgangswelle angetriebene Pumpe 75 ist über einen Anschluß 76 und eine Ringnut 77 an den Druckraum 71 angeschlossen. In Strömungsrichtung hinter dem Druckraum 71 und vor einem Auslaß 78 ist eine Drossel 80 vorgesehen, die im Druckraum 71 einen Steuerdruck erzeugt.

Das Drehschieberventil arbeitet wie folgt: In Fig. 5 ist das Drehschieberventil 10, 20 in seiner Neutralstellung gezeichnet, d. h., dieses steuert keinen Druck an. Der Fahrzeugmotor läuft, das Fahrzeug hat jedoch nur eine geringe Fahrgeschwindigkeit. Der Förderstrom der Pumpe 75 erzeugt im Druckraum 71 noch keinen ausreichenden Druck, so daß die Feder 73 den Steuerkolben 60 in der in Fig. 2 und Fig. 4 gezeichneten Ausgangstellung hält. Der Druckölfluß innerhalb des Drehschieberventils 10, 20 ist nachfolgend wiederum nur an einem der drei zusammenwirkenden Steuernuten- und Bohrungssysteme erläutert.

Das von der motorgetriebenen Pumpe 36 in die Zulaufsteuernut 6 geförderte Drucköl kann über die beidseits geöffneten Steuerkanten 6A und 6B abströmen. Das Drucköl fließt z. B. über die im Uhrzeigersinn rechts gelegene Steuernut 24 zu den Fenstern 51, 52, 53 und 57. Da aber der Steuerschieber 60 noch in seiner Ausgangsstellung verharrt, sind die Rücklaufbohrungen 11, 12, 13 gesperrt, so daß über die zugehörigen Fenster 51, 52, 53 kein Drucköl abfließt. Es ist nur die etwas größere Rücklaufbohrung 17 offen, der das Drucköl über das Fenster 57 zufließt. Von der Rücklaufbohrung 17 strömt das Öl über die Bohrung 45 und den Innenraum 46 (Fig. 1) zurück zum Behälter 48. Das Öl kann außerdem noch über den zweiten Rücklaufweg, nämlich die Axialbohrung 64 im Steuerkolben 60, die Ringnut 63, die Radialbohrung 65, das Axiallager 35 und die Gehäuserücklaufnut 66 abströmen (Fig. 2).

Die Stellung der Steuernuten 22 und 24 zu den Fenstern 51, 52, 53 bzw. 54, 55, 56 und 57 ist in der beschriebenen Neutralstellung aus Fig. 6 am deutlichsten zu ersehen. Die Steuernuten 22 und 24 (strichpunktierte Linien) schneiden sämtliche Fenster an. Wegen der Ausgangsstellung des Steuerkolbens 60 (Fig. 4) kommt jedoch zunächst ein Ölrückfluß nur vom Fenster 57 zur Rücklaufbohrung 17 zustande. Sobald das Fahrzeug seine Geschwindigkeit erhöht, steigt der Differenzdruck im Druckraum 71 (abtriebsseitige Pumpe 75!) an, und der Steuerkolben 60 bewegt sich aus der Ausgangsstellung der Fig. 4 in Pfeilrichtung nach rechts, in welcher die Ringnuten 61 und 62 mit den Rücklaufbohrungen 12, 13 bzw. 15, 16 korrespondieren und in der die Stirnseite 69 die Rücklaufbohrung 11 bzw. 14 öffnet. Der Rücklauf erfolgt nunmehr über sämtliche Fenster und ihre mehr oder weniger geöffneten Rücklaufbohrungen.

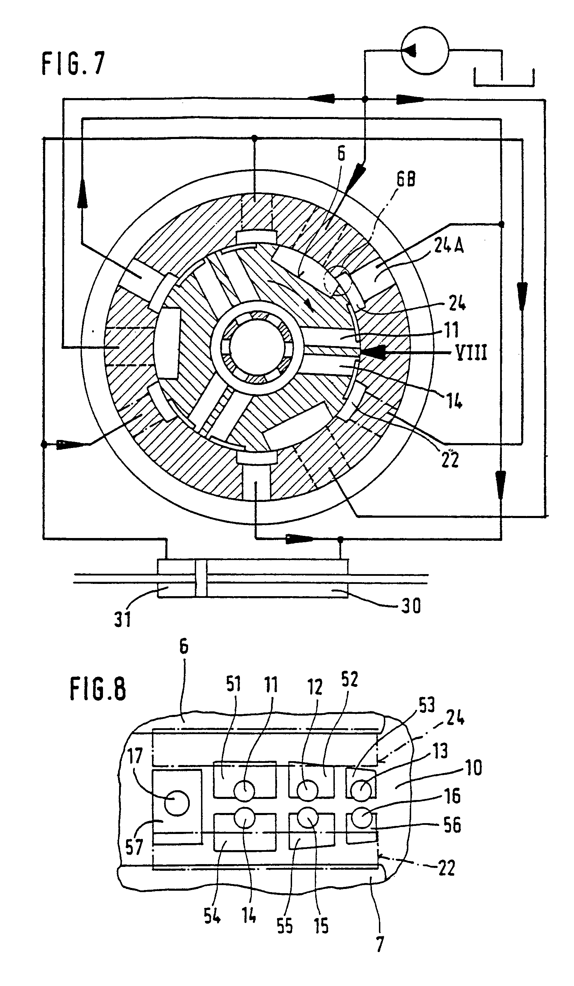

Die Fig. 7 und 8 zeigen das Drehschieberventil in einer Lenkstellung mit dem um einen bestimmten Winkelbetrag gegenüber der Ventilbuchse 20 in Pfeilrichtung verdrehten Drehschieber 10. Die Steuerkante 6B ist weit geöffnet, so daß das über die Zulaufsteuernut 6 herangeführte Drucköl in die Steuernut 24 einströmt und von dort über die Radialbohrung 24A in den Druckraum 30 abfließen kann. Der allmähliche Druckaufbau erfolgt hierbei durch die Abregelung eines Teilstromes über die Fenster 51 und 52 und über die zugehörigen Rücklaufbohrungen 11 bzw. 12. Dies ist wiederum in Fig. 8 verdeutlicht. Der abgeregelte Teilstrom kann von der Ringnut 24 über an den Fenstern 51 und 52 noch offene Spalte in die Rücklaufbohrungen 11 und 12 abströmen. Zum Fenster 53 und 57 hat jedoch die Steuernut 24 keine Verbindung mehr. Da bei diesem Abregeln nahezu die gesamte Umfangslänge der flachen Fenster 51, 52 zur Verfügung steht, kann sich der hohe Druck über eine lange Drosselstrecke abbauen. Es entstehen keine Ausströmgeräusche am Eintritt in die Rücklaufbohrungen 11 und 12.

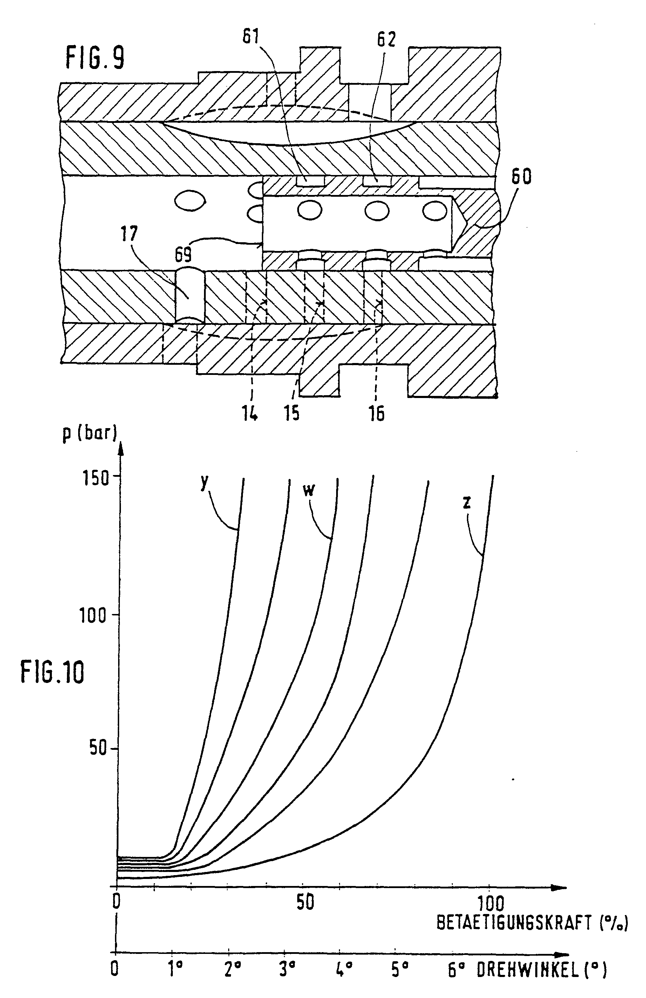

Angenommen das Fahrzeug bewegt sich mit mittlerer Geschwindigkeit, so befindet sich der Steuerkolben 60 in einer Zwischenstellung (nicht gezeichnet), in welcher er über die Stirnseite 69 und die Ringnuten 61, 62 nur Teilquerschnitte der Rücklaufbohrungen 11, 12, 13 freigibt. Der sich hieraus ergebende augenblickliche Rücklaufquerschnitt erzeugt eine ganz bestimmt Betätigungskraft am Lenkhandrad. Diese Betätigungskraft ist entsprechend der Geschwindigkeit so abgestimmt, daß sie dem Fahrer eine voll ausreichende Hilfskraftunterstützung bei gleichzeitig gutem Straßenkontakt vermittelt. Der zu diesem Betriebszustand gehörende Druckaufbau entspricht etwa der Kennlinie W in Fig. 10. — Das gleichzeitig aus dem anderen Druckraum 31 ausgeschobene Ölvolumen gelangt von der Steuernut 22, welche alle Fenster 54 bis 57 weit überdeckt, zu den Rücklaufbohrungen 14 bis 17 und kann ungehindert zum Behälter 48 abströmen.

Hat das Fahrzeug z. B. beim Einparken nur eine geringe Geschwindigkeit, so befindet sich der Steuerkolben 60 in seiner Ausgangsstellung nach Fig. 4. Die Bohrungen 11, 12, 13 sind vollkommen abgesperrt. Beim Verdrehen des Drehschiebers 10 erfolgt die Abregelung nur noch über das Fenster 57 und die Rücklaufbohrung 17. Die Fig. 8 zeigt bereits eine Stellung der Steuernut 24 zum Fenster 57, in der kein Öl mehr überströmen kann, die Druckansteuerung ist also bereits beendigt, und im Druckraum 30 herrscht der Höchstdruck. Infolge dieses anfänglich stark verringerten Rücklaufquerschnitts nur über das Fenster 57 und die Rücklaufbohrung 17 steigt die Hilfskraft im Druckraum 30 steil an, d. h., der Drehschieber 10 muß, um einen hohen Druck anzusteuern, einen nur kleinen Drehwinkel gegenüber der Ventilbüchse 20 verdreht werden. Daher bleibt auch die Betätigungskraft am Lenkhandrad verhältnismäßig klein. Das Drehschieberventil 10, 20 erzeugt hierbei einen Druckanstieg, wie er in Fig. 10 durch die Kennlinie Y dargestellt ist.

In einem weiteren angenommenen Betriebszustand fährt das Fahrzeug mit hoher Geschwindigkeit, bei welcher der Fahrer nur kleinere Lenkkorrekturen ausführt. In diesem Fall hält der Differenzdruck im Druckraum 71 den Steuerkolben 60 in seiner Endstellung rechts nach Fig. 9. Der Drehschieber 10 wird nur um einen kleinen Drehwinkel in Pfeilrichtung der Fig. 7 verdreht. Dabei schneidet die Steuernut 24 alle Fenster 51, 52, 53 und 57 an, so daß verhältnismäßig große Übertrittsquerschnitte zu den Rücklaufbohrungen 11, 12, 13 bzw. 17 entstehen. Da durch die vorerwähnte Endstellung des Steuerkolbens 60 der gesamte Rücklaufquerschnitt der Rücklaufbohrungen 11, 12, 13 offen ist, steigt der Druck im aktiven Druckraum 30 nur langsam über dem Drehwinkel an. Die Betätigungskraft am Lenkhandrad ist daher höher. Die Kennlinie Z in Fig. 10 zeigt hierzu den Verlauf des Druckanstiegs.

Zwischen den Grenzkennlinien Y und Z bilden sich entsprechend der Stellung des Steuerkolbens 60 und der Verdrehstellung des Drehschieberventils beliebige auf den jeweiligen Fahrzustand abgestimmte Kennlinien ab. Auf diese Weise erhält man eine variable Ventilcharakteristik. Die spezielle Kontur der einzelnen Fenster, z. B. 51 bis 57, zum Ansteuern des Arbeitsdrucks und die Position der Rücklaufbohrungen, z. B. 11, 12, 13 bzw. 17, in bezug auf den Steuerkolben 60 ist so gewählt, daß sich eine nahezu stufenlose Kennlinienveränderung ergibt.

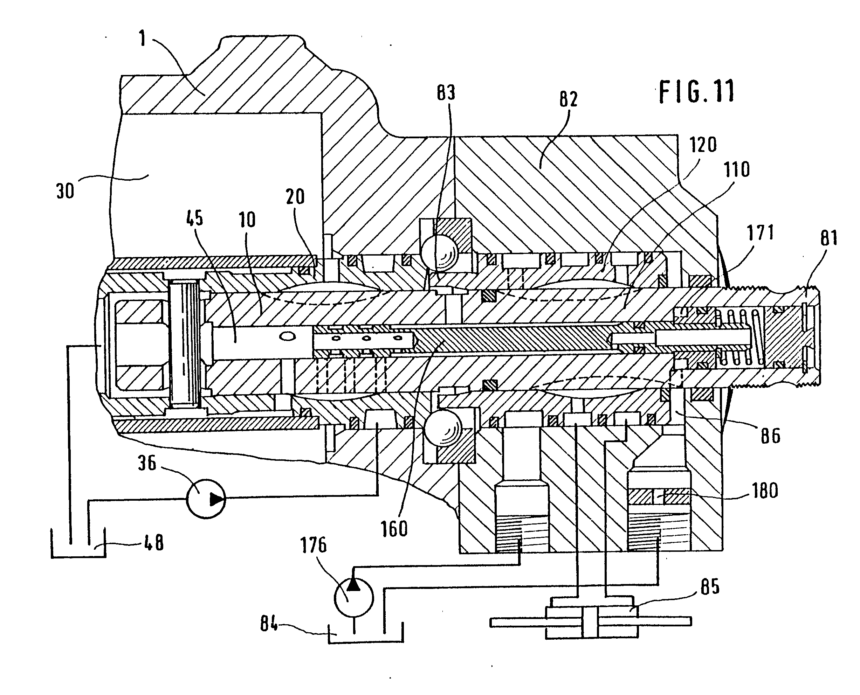

Die Fig. 11 zeigt die Anwendung der Erfindung in einer Zweikreislenkung. Das Blocklenkgetriebe, wie anhand der Fig. 1 und 2 beschrieben, bildet hierbei den ersten Lenkkreis, so daß dieser Teil der Lenkung in der Zeichnung nicht mehr dargestellt ist. Eine Lenkspindel 81 ist verlängert und durch ein an das Getriebegehäuse 1 angeflanschtes Gehäuse 82 geführt. Die Lenkspindel 81 trägt neben dem Drehschieber 10 einen weiteren Drehschieber 110. Der Drehschieber 110 wirkt mit einer Ventilbuchse 120 zusammen, die zur Drehmitnahme mittels einer Nase 83 in eine Aussparung der Gewindespindel 20 eingreift. Die motorgetriebene Pumpe 36 saugt Öl aus dem Behälter 48 an und fördert es beim Lenken über das Drehschieberventil 10, 20 in einen der Druckräume 30 oder 31. Die vorgenannten Bauteile gehören zum ersten Lenkkreis. Eine weitere, jedoch fahrgeschwindigkeitsabhängige Pumpe 175 saugt Öl aus einem anderen Behälter 84 an und steht über das Drehschieberventil 110, 120 mit einem separaten, mit dem Lenkgestänge verbundenen Arbeitszylinder 85 in Verbindung. Diese letzteren Bauteile gehören zum zweiten Lenkkreis. Bei voll funktionsfähiger Lenkung steuert das Drehschieberventil 110, 120 des zweiten Lenkkreises keinen Druck im Arbeitszylinder 85 an. Fällt der erste Lenkkreis, z. B. infolge eines Leitungsbruchs aus, so muß der Fahrer die Lenkspindel 81 noch stärker verdrehen, bis das Steuernutensystem des Drehschiebers 110, 120 des zweiten Lenkkreises einen Druck im Arbeitszylinder 85 ansteuert. Dieses verzögerte Ansprechen des Drehschieberventils 110, 120 läßt sich z. B. in bekannter Weise dadurch erreichen, daß die Steuerschlitze der sich gegenüber liegenden Steuernuten etwas breiter ausgeführt sind.

Der zum ersten Lenkkreis gehörende Drehschieber 10 hat dasselbe Rücklaufbohrungssystem mit zugehörigen Fenstern, wie es bereits in Verbindung mit den Fig. 3 bis 9 beschrieben wurde. Der wesentliche Unterschied besteht jedoch darin, daß der in der konzentrischen Bohrung 45 des Drehschiebers 10 geführte Steuerkolben 160 durch den Drehschieber 110 des zweiten Lenkkreises hindurchgeführt ist. Ein Druckraum 171 des Steuerkolbens 160 hat mit einem Rücklaufkanal 86 der Pumpe 175 des zweiten Lenkkreises Verbindung. Damit sich der geschwindigkeitsabhängige Steuerdruck im Druckraum 171 ausbilden kann, ist wiederum eine Drossel 180 vorgesehen. Die proportional zur Geschwindigkeit umlaufende Pumpe 175 erfüllt somit die weitere Funktion eines geschwindigkeitsabhängigen Signalgebers für die Öl-Rücklaufsteuerung im ersten Lenkkreis.

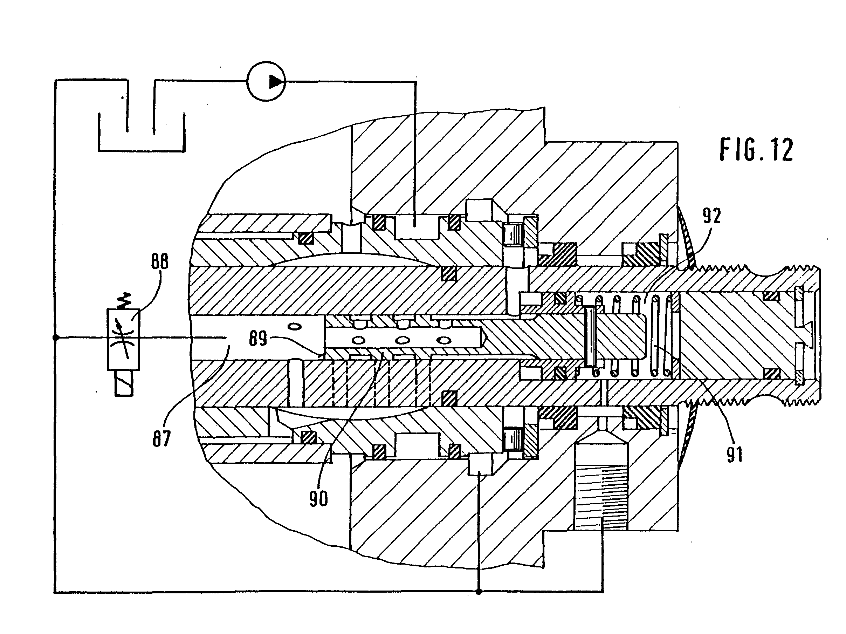

Die Fig. 12 unterscheidet sich von der Fig. 2 dadurch, daß der über die konzentrische Bohrung 87 abgeleitete Rücklaufstrom durch ein elektrisch betätigtes Drosselventil 88 aufgestaut werden kann. Dieses Drosselventil 88 erhält von einem Steuergerät elektrische Signale, welches Eingangsinformationen verschiedener Einflußgrößen (z. B. Zuladung, Querbeschleunigung, Geschwindigkeit) verarbeitet. Durch den Aufstau des Rücklaufstromes entsteht eine auf eine Stirnäche 89 des Steuerkolbens 90 wirkende Druckkraft, die diesen in Richtung auf die Feder 91 verschiebt. Der Raum 92 ist hinter dem Drosselventil 88 zum Rücklauf entlastet.

Bezugszeichen
  1 Getriebegehäuse
  2 Arbeitskolben
  3 Lenkspindel

4 Drehstab
5 Gewindespindel
6 Zulaufsteuernut
6A, 6B Steuerkanten
7 Zulaufsteuernut
8 Zulaufsteuernut
9 Bohrungsreihe
9A Bohrungsreihe
10 Drehschieber
11 Rücklaufbohrung
12 Rücklaufbohrung
13 Rücklaufbohrung
14 Rücklaufbohrung
15 Rücklaufbohrung
16 Rücklaufbohrung
17 Rücklaufbohrung
18 —
19 —
20 Ventilbuchse
21 Steuernut
21A Radialbohrung
22 Steuernut
23 Steuernut
24 Steuernut
25 Steuernut
25A Radialbohrung
26 Steuernut
27 Bohrung
28 Querbolzen
29 Lenksegment
30 Druckraum
31 Druckraum
32 Kugelkette
33 Verzahnung
34 Lenkwelle
35 Axiallager
36 Axiallager
37 Ringnut
38 —
39 —
40 Ringspalt
41 Ringspalt
42 Ringspalt
43 —
44 Rohr
45 konzentrische Bohrung
46 Innenraum von 5
47 Deckel
48 Behälter
49 —
50 Deckel
51 Fenster
52 Fenster
53 Fenster
54 Fenster
55 Fenster
56 Fenster
57 Fenster
58 Steg
59 —
60 Steuerkolben
61 Ringnut
62 Ringnut
63 lange Ringnut
64 Sackbohrung in 60

65 Radialbohrung in 10
66 Gehäuserücklaufnut
67 Stopfen
68 Raum
69 Stirnseite von 60
70 Ringansatz
71 Druckraum
72 Stift
73 Feder
74 Axialbohrung
75 abtriebsseitige Pumpe
76 Anschluß
77 Ringnut
78 Auslaß
79 —
80 Drossel
81 Lenkspindel
82 Gehäuse
83 Nase
84 Behälter
85 Arbeitszylinder
86 Rücklaufkanal
87 konzentrische Bohrung
88 Drosselventil
89 Stirnfläche
90 Steuerkolben
91 Feder
92 Raum
110 Drehschieber
120 Ventilbuchse
160 Steuerkolben
171 Druckraum
175 Pumpe (fahrgeschwindigkeitsabhängig)
180 Drossel
W Kennlinie
Y Kennlinie
Z Kennlinie

**Patentansprüche**

1. Drehschieberventil für hydraulische Hilfskraftlenkung von Kraftfahrzeugen mit folgenden Merkmalen:

Das Drehschieberventil besteht aus einer Ventilbuchse (20), die einen Drehschieber (10) umschließt;

in die Innenfläche der Ventilbuchse (20) und die Außenfläche des Drehschiebers (10) sind miteinander zusammenwirkende, längs verlaufende Steuernuten eingearbeitet, die das Drucköl für einen Arbeitszylinder (12) steuern;

der Drehschieber (10) und die Ventilbuchse (20) sind durch einen Drehstab (4) elastisch miteinander verbunden;

der Drehschieber (10) enthält radial verlaufende Rücklaufbohrungen (11, 12, 13 bzw. 14, 15, 16), die eine Verbindung zu einem Ölbehälter (48) herstellen;

die Rücklaufbohrungen münden in eine konzentrische Bohrung (45) des Drehschiebers,

gekennzeichnet durch folgende Merkmale:

Die Rücklaufbohrungen (11, 12, 13 bzw. 14, 15, 16) im Drehschieber (10) sind für jede Drehrichtung getrennt in Längsrichtung hintereinander angeordnet, so daß jeweils zwei nebeneinander liegende Bohrungsreihen (9 bzw. 9A) entstehen;

jede Bohrungsreihe (9 bzw. 9A) ist einer mit dem Arbeitszylinder (1, 2) verbundenen Steuernut (24 bzw. 22) in der Ventilbuchse (20) zugeordnet;

ein Steuerkolben (60) ist zum Verändern des Rücklaufquerschnitts im Drehschieber (10) in Abhängigkeit von einer hydraulischen Verstellkraft so verschiebbar, da8 er die Rücklaufbohrungen mehr oder weniger abdeckt, wodurch man variable Betätigungskräfte am Lenkhandrad erhält (Fig. 2, 3, 4).

2. Drehschieberventil nach Anspruch 1, gekennzeichnet durch folgende Merkmale:

Der Steuerkolben (60) weist eine zur Bohrung des Drehschiebers (10) offene Sackbohrung (64) auf;

in die Außenfläche des Steuerkolbens (60) sind etwa im Abstand der im Drehschieber (10) vorgesehenen radialen Rücklaufbohrungen (11, 12, 13 bzw. 14, 15, 16) mit der Sackbohrung (64) verbundene Ringnuten (61, 62, 63) eingearbeitet;

die Ringnuten (61, 62) können durch Verschieben des Steuerkolbens (60) von einer Sperrstellung ausgehend mit einem Teil der Rücklaufbohrungen (12, 13 bzw. 15, 16) in Überdeckung gebracht werden, wobei eine dem Drehstab (4) zugewandte Stirnseite (69) des Steuerkolbens (60) den anderen Teil der Rücklaufbohrungen (11, 14) steuert;

anschließend an zwei nebeneinander liegende Bohrungsreihen (9 bzw. 9A) liegt mittig zu diesen eine weitere Rücklaufbohrung (17), deren Querschnitt als Restquerschnitt stets geöffnet ist.

3. Drehschieberventil nach Anspruch 1, gekennzeichnet durch folgende Merkmale:

Die Rücklaufbohrungen (11-16) sind von Fenstern (51-56) umgeben;

die Fenster haben unterschiedliche Breite und Umfangslänge;

ein Teil der Fenster ist mit einer schrägen Außenkontur versehen;

die Rücklaufbohrungen (11, 12, 13 bzw. 14, 15, 16) und die zugehörigen Fenster (51, 52, 53 bzw. 54, 55, 56) sind durch einen längs verlaufenden Steg (58) hydraulisch voneinander getrennt, und

die mittig zu den beiden Bohrungsreihen (9A und 9B) liegende Rücklaufbohrung (17) hat ein Fenster (57), das in beiden Drehrichtungen wirksam ist (Fig. 3).

4. Drehschieberventil nach Anspruch 3, dadurch gekennzeichnet, daß das Fenster (57) der stets geöffneten Rücklaufbohrung (17) in Umfangsrichtung die geringste Länge hat.

5. Drehschieberventil nach Anspruch 1, gekennzeichnet durch folgende Merkmale:

Der Steuerkolben (60) trägt einen Ringansatz (70);

der Ringansatz (70) bildet zusammen mit dem Drehschieber (10) einen Druckraum (71);

der Druckraum (71) ist an eine abtriebsseitig angetriebene Pumpe (75) angeschlossen, und

in Stromrichtung hinter dem Druckraum (71) ist eine Drossel (80) eingebaut (Fig. 2).

6. Drehschieberventilanordnung für hydraulische Hilfskraftlenkungen mit zwei voneinander unabhängigen Lenkkreisen mit folgenden Merkmalen:

Auf einer Lenkspindel (81) befinden sich zwei axial hintereinander angeordnete Drehschieberventile, die jeweils aus einer Ventilbuchse (20, 120) und einem Drehschieber (10, 110) bestehen;

jedem Drehschieberventil ist zur Steuerung des Drucköls eine Pumpe und ein Arbeitszylinder zugeordnet, so daß ein erster und ein zweiter Lenkkreis vorhanden ist;

die Pumpe (36) des ersten Lenkkreises treibt ein Fahrzeugmotor an;

die Pumpe (175) des zweiten Lenkkreises hat einen abtriebsseitigen Antrieb;

die Drehschieber (10, 110) enthalten radial verlaufende Rücklaufbohrungen, die eine Verbindung zu einem Ölbehälter herstellen, gekennzeichnet durch folgende Merkmale:

Der durch die Rücklaufbohrungen (11, 12, 13 bzw. 14, 15, 16, 17) im Drehschieber (10) des zum ersten Lenkkreis gehörenden Drehschieberventils (10, 20) geschaffene Rücklaufquerschnitt ist durch einen Steuerkolben (160) veränderbar, und

der Steuerkolben (160) steht unter dem Einfluß des Förderstroms der abtriebsseitig angetriebenen Pumpe (175) des zweiten Lenkkreises (Fig. 11).

7. Drehschieberventilanordnung nach Anspruch 6, gekennzeichnet durch folgende Merkmale:

Der Steuerkolben (60) hat eine Verlängerung, die durch den Drehschieber (110) des zum zweiten Lenkkreis gehörenden Drehschieberventils (110, 120) hindurchgeführt ist;

die Verlängerung trägt einen Ringansatz (170);

der Ringansatz (170) bildet zusammen mit dem Drehschieber (110) einen Druckraum (171), und

in Stromrichtung hinter dem Druckraum (171) ist eine Drossel (180) eingebaut.

8. Drehschieberventilanordnung nach Anspruch 6, gekennzeichnet durch folgende Merkmale:

Die Rücklaufbohrungen (11, 12, 13 bzw. 14, 15, 16) im Drehschieber (10) des ersten Lenkkreises sind für jede Drehrichtung getrennt in Längsrichtung hintereinander angeordnet, so daß jeweils zwei nebeneinander liegende Bohrungsreihen (9 bzw. 9A) entstehen;

jede Bohrungsreihe (9 bzw. 9A) ist einer mit dem Arbeitszylinder (1, 2) des ersten Lenkkreises verbundenen Steuernut (74 bzw. 22) der Ventilbuchse (20) zugeordnet;

die Rücklaufbohrungen (11-16) sind von Fenstern (51-56) umgeben;

die Bohrungsreihen (9 und 9A) und die zugehörigen Fenster (51, 52, 53 bzw. 54, 55, 56) sind durch einen längs verlaufenden Steg (58) hydraulisch voneinander getrennt;

anschließend an zwei nebeneinander liegende Bohrungsreihen (9 bzw. 9A) liegt mittig zu diesen eine weitere Rücklaufbohrung (17), deren Querschnitt als Restquerschnitt stets geöffnet ist, und

die mittig liegende Rücklaufbohrung (17) hat ein Fenster (57), das in beiden Drehrichtungen wirksam ist.

9. Drehschieberventil nach Anspruch 1, gekennzeichnet durch folgende Merkmale:

In den Rücklaufstrom stromabwärts hinter den Steuerkolben (90) ist ein elektrisch betätigtes Drosselventil (88) eingebaut, und

das elektrische Drosselventil (88) erzeugt zur Verstellung des Steuerkolbens (90) einen auf eine Stirnfläche (89) wirkenden Staudruck (Fig. 12).

**Revendications**

1. Soupape de distribution rotative pour servodirection hydraulique de véhicules, dans laquelle:

la soupape comprend une cage de soupape (20) qui entoure un tiroir rotatif (10);

la surface intérieure de la cage (20) et la surface extérieure du tiroir (10) comportent des rainures longitudinales de commande qui coopèrent mutuellement et qui distribuent l'huile hydraulique pour un vérin de travail (1, 2);

le tiroir (10) et la cage (20) sont reliés élastiquement l'un à l'autre par une barre de torsion (4);

le tiroir (10) contient des trous radiaux de retour (11, 12, 13; 14, 15, 16) qui établissent une communication avec un réservoir d'huile (48);

les trous de retour débouchent dans un alésage concentrique (45) du tiroir,

caractérisée par les particularités suivantes:

les trous de retour (11, 12, 13; 14, 15, 16) du tiroir (10) sont disposés sur des rangées longitudinales séparées pour chaque sens de rotation, de façon à former deux rangées de trous juxtaposées (9, 9A);

chaque rangée de trous (9, 9A) est associée dans la cage (20) à une rainure de commande (24, 22) reliée au vérin (1, 2);

un piston de commande (60) est monté dans le tiroir (10) de manière coulissante pour modifier la section de passage de retour en fonction d'une force hydraulique de réglage, de façon à découvrir plus ou moins les trous de retour pour nécessiter des forces d'actionnement variables au volant (fig. 2, 3, 4).

2. Soupape de distribution rotative selon la revendication 1, caractérisée par les particularités suivantes:

le piston de commande (60) comporte un alésage borgne (64) ouvert vers l'alésage du tiroir (10);

la surface extérieure du piston de commande (60) comporte des rainures annulaires (61, 62, 63) reliées audit alésage borgne (64) et espacées sensiblement de la même manière que les trous radiaux de retour (11, 12, 13; 14, 15, 16) prévus dans le tiroir (10);

par coulissement du piston de commande (60), les rainures annulaires (61, 62) peuvent être amenées d'une position de blocage à une position de recouvrement avec une partie des trous de retour (12, 13; 15, 16), où une face frontale (69) du piston de commande (60), du côté de la barre de torsion (4), commande l'autre partie des trous de retour (11; 14);

à proximité des deux rangées de trous juxtaposées (9, 9A) et en position médiane par rapport à celles-ci, il est prévu un trou de retour supplémentaire (17) dont la section transversale est ouverte en permanence pour servir de section résiduelle.

3. Soupape de distribution rotative selon la revendication 1, caractérisée par les particularités suivantes:

les trous de retour (11 à 16) sont entourés par des fenêtres (51 à 56);

les fenêtres ont différentes largeurs et différents périmètres;

une partie des fenêtres présente un contour extérieur disposé en biais.

les trous de retour (11, 12, 13; 14, 15, 16) et les fenêtres correspondantes (51, 52, 53; 54, 55, 56) sont séparés hydrauliquement les uns des autres par une portée longitudinale (58); et

le trou de retour (17), situé en position médiane par rapport aux deux rangées de trous (9A, 9B), comporte une fenêtre (57) agissant dans les deux sens de rotation (fig. 3).

4. Soupape de distribution rotative selon la revendication 3, caractérisée en ce que la fenêtre (57) du trou de retour ouvert en permanence (17) a la plus faible longueur en direction circonférentielle.

5. Soupape de distribution rotative selon la revendication 1, caractérisée par les particularités suivantes:

le piston de commande (60) porte une protubérance annulaire (70);

ladite protubérance (70) définit avec le tiroir (10) une chambre de pression (71);

ladite chambre (71) est raccordée à une pompe (75) entraînée par le côté de sortie de la transmission, et

un étranglement (80) est disposé en aval de ladite chambre (71) par rapport au sens d'écoulement (fig. 2).

6. Dispositif de soupapes de distribution rotatives pour servodirection hydraulique à deux circuits indépendants l'un de l'autre, comportant les particularités suivantes:

deux soupapes de distribution rotatives se trouvent axialement l'une derrrière l'autre sur un arbre de direction (81) et comprennent chacune une cage de soupape (20, 120) et un tiroir rotatif (10, 110);

chacune des soupapes de distribution est associée respectivement à une pompe et à un vérin de travail pour commander la distribution d'huile sous pression, de sorte qu'il y a un premier et un second circuit de direction;

la pompe (36) du premier circuit est entraînée par un moteur du véhicule;

la pompe (175) du second circuit comporte un entraînement du côté de sortie de la transmission;

les tiroirs (10, 110) contiennent des trous radiaux de retour qui établissent une communication avec un réservoir d'huile,

caractérisé par les particularités suivantes:

la section de passage de retour offerte par les trous de retour (11, 12, 13; 14, 15, 16, 17) du tiroir (10) de la soupape de distribution (10, 20) appartenant au premier circuit est variable grâce à un piston de commande (160), et

le piston de commande (160) est sous l'influence du débit d'huile de la pompe (175) du second circuit, entraînée du côté de sortie de la transmission (fig. 11).

7. Dispositif selon la revendication 6, caractérisé par les particularités suivantes:

le piston de commande (60) comporte un prolongement qui s'étend à travers le tiroir (110) de la soupape de distribution (110, 120) appartenant au second circuit;

ledit prolongement porte une protubérance annulaire (170);

ladite protubérance (170) définit avec le tiroir (110) une chambre de pression (171), et

un étranglement (180) est disposé en aval de ladite chambre (171) par rapport au sens d'écoulement.

8. Dispositif selon la revendication 6, caractérisé par les particularités suivantes:

les trous de retour (11, 12, 13; 14, 15, 16) du tiroir (10) du premier circuit sont disposés sur des rangées longitudinales séparées pour chaque sens de rotation, de façon à former deux rangées de trous juxtaposées (9, 9A);

chaque rangée de trous (9, 9A) est associée dans la cage (20) à une rainure de commande (24, 22) reliée au vérin (1, 2) du premier circuit;

les trous de retour (11 à 16) sont entourés par des fenêtres (51 à 56);

les rangées de trous (9, 9A) et les fenêtres correspondantes (51, 52, 53; 54, 55, 56) sont séparées hydrauliquement les unes des autres par une portée longitudinale (58);

à proximité des deux rangées de trous juxtaposées (9, 9A) et en position médiane par rapport à celles-ci, il est prévu un trou de retour supplémentaire (17) dont la section transversale est ouverte en permanence pour servir de section résiduelle, et

ledit trou de retour (17) situé en position médiane comporte une fenêtre (57) agissant dans les deux sens de rotation.

9. Soupape de distribution rotative selon la revendication 1, caractérisée par les particularités suivantes:

une soupape à étranglement (88) à commande électrique est disposée sur le retour en aval du piston de commande (90), et

ladite soupape à étranglement (88) crée une pression de retenue agissant sur une surface frontale (89) du piston de commande (90) pour déplacer ce piston (fig. 12).

**Claims**

1. Rotary slide valve for hydraulic power assisted steering systems of motor vehicles having the following features:

the rotary slide valve comprises a valve bush (20) which surrounds a rotary slide gate (10);

worked into the inner surface of the valve bush (20) and the outer surface of the rotary slide gate (10) are longitudinally extending control grooves which cooperate with one another and control the compressed oil for a working cylinder (12);

the rotary slide gate (10) and the valve bush (20) are resiliently connected to one another by a torsion bar (4);

the rotary slide gate (10) includes radially extending return bores (11, 12, 13 and 14, 15, 16) which form a connection with an oil tank (48);

the return bores open out into a concentric bore (45) of the rotary slide gate,

characterised by the following features:

the return bores (11, 12, 13 and 14, 15, 16) in the rotary slide gate (10) are disposed separately for each direction of rotation longitudinally behind one another so that two adjacent rows of bores (9 and 9A) are produced;

each row of bores (9 or 9A) is allocated to a control groove (24 or 22) in the valve bush (20) connected to the working cylinder (1, 2), and

a control piston (60) is displaceable for varying the return cross-section in the rotary slide gate (10) in dependence upon a hydraulic adjusting force in such a manner that it covers the return bores to a greater or lesser extent, thereby producing variable actuating forces at the steering wheel (Figs. 2, 3, 4).

2. Rotary slide valve according to claim 1, characterised by the following features:

the control piston (60) has a blind bore (64) which is open towards the bore of the rotary slide gate (10);

worked into the outer surface of the control piston (60) substantially in the spacing of the radial return bores (11, 12, 13 and 14, 15, 16) provided in the rotary slide gate (10) are annular grooves (61, 62, 63) which are connected to the blind bore (64);

by displacing the control piston (60) from a blocking position, the annular grooves (61, 62) can be moved so that they overlap a portion of the return bores (12, 13 and 15, 16), an end (69) of the control piston (60) facing the torsion bar (4) then controlling the other portion of the return bores (11, 14);

adjoining two adjacent-lying rows of bores (9 and 9A) and centrally to them is a further return bore (17) whose cross-section is constantly open as a residual cross-section.

3. Rotary slide valve according to claim 1, characterised by the following features:

the return bores (11 to 16) are surrounded by windows (51 to 56);

the windows vary in width and perimeter length;

a portion of the windows is provided with an oblique outer contour;

the return bores (11, 12, 13 and 14, 15, 16) and the associated windows (51, 52, 53 and 54, 55, 56) are hydraulically separated from one another by a longitudinal web (58), and

the return bore (17) lying centrally relative to the two rows of bores (9A and 9B) has a window (57) which is effective in both directions of rotation (Fig. 3).

4. Rotary slide valve according to claim 3, characterised in that the window (57) of the constantly open return bore (17) is smallest in a peripheral direction.

5. Rotary slide valve according to claim 1, characterised by the following features:

the control piston (60) carries an annular shoulder (70);

the annular shoulder (70) together with the rotary slide gate (10) forms a pressure chamber (71);

the pressure chamber (71) is connected to a pump (75) driven on the power take-off side, and

a throttle (80) is installed downstream of the pressure chamber (71) (Fig. 2).

6. Rotary slide valve arrangement for hydraulic power assisted steering systems having two independent steering circuits having the following features:

located on the steering shaft (81) are two rotary slide valves which are disposed axially one behind the other and each comprise a valve bush (20, 120) and a rotary slide gate (10, 110);

a pump and a working cylinder are allocated to each rotary slide valve for controlling the compressed oil so that a first and a second steering circuit are provided;

the pump (36) of the first steering circuit is driven by a vehicle engine;

the pump (175) of the second steering circuit has a power take-off side drive;

the rotary slide gates (10, 110) include radially extending return bores which establish a connection with an oil tank,

characterised by the following features:

the return cross-section created by the return bores (11, 12, 13 and 14, 15, 16) in the rotary slide gate (10) of the rotary slide valve (10, 20) forming part of the first steering circuit is variable by means of a control piston (160), and

the control piston (160) is under the influence of the delivery.

7. Rotary slide valve arrangement according to claim 6, characterised by the following features:

the control piston (60) has an extension which is guided through the rotary slide gate (110) of the rotary slide valve (110, 120) forming part of the second steering circuit;

the extension carries an annular shoulder (170);

the annular shoulder (170) together with the rotary slide gate (110) forms a pressure chamber (171), and

a throttle (180) is installed downstream of the pressure chamber (171).

8. Rotary slide valve arrangement according to claim 6, characterised by the following features:

the return bores (11, 12, 13 and 14, 15, 16) in the rotary slide gate (10) of the first steering circuit are disposed separately for each direction of rotation longitudinally behind one another so that two adjacent-lying rows of bores (9 and 9A) are produced;

each row of bores (9 or 9A) is allocated to a control groove (74 or 22) of the valve bush (20) connected to the working cylinder (1, 2) of the first steering circuit;

the return bores (11-16) are surrounded by windows (51-56);

the rows of bores (9 and 9A) and the associated windows (51, 52, 53 and 54, 55, 56) are hydraulically separated from one another by means of a longitudinal web (58);

adjoining two adjacent-lying rows of bores (9 and 9A) and centrally to them is a further return bore (17) whose cross-section is constantly open as a residual cross-section, and

the centrally located return bore (17) has a window (57) which is effective in both directions of rotation.

9. Rotary slide valve according to claim 1, characterised by the following features:

an electrically actuated throttle valve (88) is installed in the return flow downstream of the control piston (90), and

for adjusting the control piston (90), the electrical throttle valve (88) produces a dynamic pressure which acts upon an end (89) (Fig. 12).

FIG.1

EP 0 323 972 B1

FIG. 2

EP 0 323 972 B1

FIG.3

FIG.4

FIG. 5

FIG. 6

FIG.7

FIG.8

FIG.9

61    62

60

17

69

14    15    16

p (bar)

150

y    w    z

FIG.10

100

50

0    50    100

BETAETIGUNGSKRAFT (%)

0    1°    2°    3°    4°    5°    6° DREHWINKEL(°)

FIG.11

EP 0 323 972 B1

FIG.12